# EUROPÄISCHE PATENTANMELDUNG

(11) **EP 4 478 013 A1**
(43) Veröffentlichungstag der Anmeldung: **18.12.2024**
(21) Anmeldenummer: 23178774.8
(22) Anmeldetag: 12.06.2023
(51) Int. Cl.: G01H 3/00, B08B 3/12, G01H 11/08

(54) **ELEKTROMECHANISCHE MESSEINHEIT**

(71) Anmelder: Elma Schmidbauer GmbH, 78224 Singen (DE)
(72) Erfinder: Holly, David, 88690 Uhldingen-Mühlhofen (DE); Thiele, Markus, 78315 Radolfzell (DE)
(74) Vertreter: Patent- und Rechtsanwälte Behrmann Wagner PartG mbB

(57) **Zusammenfassung**

Die vorliegende Erfindung betrifft eine elektromechanische Messeinheit, zur Anwendung in einer Ultraschallbehandlungsvorrichtung (20) mit einer Behandlungseinheit (16) für die Aufnahme eines Behandlungsmediums (17) und zu behandelnden Geräten oder Werkstücken, wobei die Behandlungsvorrichtung Anregungsmittel (18) aufweist, welche bei einem aktiven Behandlungszustand der Behandlungsvorrichtung (20) zyklische Kavitation erzeugen und bei einem Ruhezustand keine Kavitation erzeugen, wobei die Messeinheit (1) Messmittel (2) umfasst, welche dazu eingerichtet sind Messsignale zu erzeugen, die wenigstens eine, während dem aktiven Behandlungszustand der Behandlungsvorrichtung (20) bestehende, Behandlungsprozessgröße, wenigstens Schallereignisse erfassen. Erfindungsgemäß ist vorgesehen, dass die Messmittel (2) und eine Auswerteelektronik (3), die zur Erzeugung von qualitativen und/oder quantitativen Messwerten der Behandlungsprozessgröße aus den Messsignalen eingerichtet ist, in einem gemeinsamen, bevorzugt hermetisch versiegelten, Gehäuse (4) der Messeinheit angeordnet sind.

## Beschreibung

Die vorliegende Erfindung betrifft eine elektromechanische Messeinheit zur Anwendung in einer Ultraschallbehandlungsvorrichtung mit einer Behandlungseinheit zur Aufnahme eines Behandlungsmediums und zu behandelnden Geräten oder Werkstücken.

Derartige Messeinheiten sind in unterschiedlichen Ausgestaltungen grundsätzlich und gattungsbildend bekannt, zum Beispiel aus der US 10 953 440 B2. Der Anwendungsbereich solcher Messeinheiten findet sich in der Regel bei der Validierung und Re-Validierung von Ultraschallbehandlungsvorrichtungen, welche durch Anregungsmittel eine Kavitationswirkung in einem Behandlungsmedium erzeugen mithilfe derer eine Reinigung von Geräten oder Werkstücken bereitgestellt oder unterstützt werden kann. Bekannte Messeinheiten umfassen dabei ein Hydrophon oder einen Messsensor welcher Schallsignale kollabierender Kavitationsblasen aufnehmen kann, wenn er in Kontakt mit dem Behandlungsmedium steht. Je nach Ausführungsform kann es nötig sein das Hydrophon durch das Behandlungsmedium zu bewegen um die Kavitationsleistung in der Behandlungseinheit zu erfassen. Das Hydrophon oder der Messsensor sind in der Regel als stabförmige Sonde ausgebildet welche an einem Ende durch ein Kabel mit einer Auswerteinheit verbunden ist. Die aufgenommenen Messsignale werden an diese Auswerteinheit übertragen, welche außerhalb des Behandlungsmediums positioniert wird. Die Messsignale können auf der Auswerteinheit in Messwerte umgewandelt werden, welche dem Nutzer eine Auskunft über die Behandlungsleistung der Ultraschallbehandlungsvorrichtung zum Zeitpunkt der Messung geben können.

Nachteilig an dieser Kombination von flüssigkeitstauglichen und - untauglichen Geräteteilen in den bekannten Messeinheiten ist, dass die Messeinheiten nicht frei in der Behandlungseinheit positioniert werden können bzw. nicht in jeder Position praktikabel fixiert werden können. Dementsprechend können die bekannten Messeinheiten auch nicht mit einer Behandlungseinheit durch eine Reinigungsanlage bewegt werden. Ebenfalls, können die Messeinheiten nicht zusammen mit zu behandelnden Geräten oder Werkstücken während des Behandlungszustands in der Behandlungseinheit bleiben, da die stabförmigen Hydrophone oder Messsensoren insgesamt zu instabil sind oder empfindliche Teile aufweisen, welche durch die Beladung Schaden nehmen können. Die bekannten Messeinheiten sind daher begrenzt bezüglich der Behandlungsschritte und Zeiträume, in denen sie benutzt werden können.

Vor diesem Hintergrund besteht die Aufgabe der vorliegenden Erfindung darin die Nachteile im Stand der Technik zu überwinden, insbesondere eine Messeinheit vorzuschlagen die während des Behandlungsprozesses in einer Ultraschallbehandlungsvorrichtung verbleiben kann und konstant Messwerte erzeugen und auswerten kann.

Diese Aufgabe wird mit einer elektromechanischen Messeinheit mit den Merkmalen des Anspruch 1 gelöst. Weiterhin wird die Aufgabe durch ein Messsystem nach Anspruch 12 und ein Messverfahren nach Anspruch 15 gelöst.

Vorteilhafte Ausführungsformen der erfindungsgemäßen Reinigungsvorrichtung sind Gegenstand der nachfolgenden Beschreibung und Figurenbeschreibung sowie der Unteransprüche.

Die vorrichtungsmäßig beschriebenen und beanspruchten Merkmale sollen auch als entsprechend verfahrensmäßig offenbart und beanspruchbar gelten, und umgekehrt.

Die elektromechanische Messeinheit sieht, wie oben bereits eingeführt, eine Anwendung in einer Ultraschallbehandlungsvorrichtung mit einer Behandlungseinheit für die Aufnahme eines Behandlungsmediums und zu behandelnden Geräten oder Werkstücken vor.

Die Ultraschallbehandlungsvorrichtung weist dabei Anregungsmittel auf, welche bei einem aktiven Behandlungszustand der Behandlungsvorrichtung eine Kavitationswirkung erzeugen und bei einem Ruhezustand keine Kavitation erzeugen

Die Messeinheit umfasst Messmittel, welche dazu eingerichtet sind Messsignale zu erzeugen, die wenigstens eine, während dem aktiven Behandlungszustand der Behandlungsvorrichtung bestehende, Behandlungsprozessgröße erfassen. Der Ausdruck Behandlungsprozessgröße soll sich in diesem Zusammenhang auf jene physikalischen und chemischen Größen beziehen, welche die bei einem aktiven Behandlungszustand der Behandlungsvorrichtung, erzeugte Behandlungs- bzw. Reinigungsleistung wenigstens mittelbar charakterisieren bzw. quantifizieren. In diesem Sinne sind zum Beispiel primär oder sekundär durch Anregungsmittel der Behandlungsvorrichtung erzeugte Schallereignisse Behandlungsprozessgrößen, welche Aufschluss über die Behandlungsleistung geben können. Primär erzeugte Schallereignisse sind zum Beispiel durch die Anregungsmittel erzeugte Schalldrücke. Sekundär erzeugte Schallereignisse sind zum Beispiel stochastische Schallsignale kollabierender Kavitationsblasen und/oder deterministische Schallsignale schwingender Kavitationsblasen.

Erfindungsgemäß ist dabei vorgesehen, dass die Messmittel und eine Auswerteelektronik, die zur Erzeugung von qualitativen und/oder quantitativen Messwerten der Behandlungsprozessgröße aus den Messsignalen eingerichtet ist, in einem gemeinsamen, bevorzugt hermetisch versiegelten, Gehäuse der Messeinheit angeordnet sind.

Die vorliegende Erfindung hat erkannt, dass durch die Anordnung von Messmitteln und Auswertelektronik in einem gemeinsamen, hermetisch versiegelten Gehäuse verschiedene Probleme gelöst werden können, die insgesamt dazu führen, dass die Messeinheit ausgewertete Messwerte zur Auskunft über wenigstens eine Behandlungsprozessgröße weitestgehend oder sogar vollständig unabhängig von dem sonstigen Zustand oder der Ausgestaltung der Ultraschallbehandlungsvorrichtung als Momentaufnahme und/oder temporal aufgelöst über einen längeren Zeitraum, zum Beispiel ein Behandlungsdurchlauf einer einzelnen Behandlungsvorrichtung oder einer Reinigungsanlage, bereitstellen kann.

Denn durch die gemeinsame Anordnung der Messmittel und Auswertelektronik in einem hermetisch versiegelten Gehäuse ist es möglich die Messeinheit in ihrer Gesamtheit innerhalb der Ultraschallbehandlungsvorrichtung, insbesondere innerhalb der Behandlungseinheit, anzuordnen und zu benutzen oder zu betreiben. Dadurch können aufgenommene Messsignale direkt innerhalb des Gehäuses zu qualitativen und/oder quantitativen Messwerten umgewandelt werden ohne, dass eine mechanisch komplexe und/oder potentiell störanfällige Verbindung, beispielsweise Kabelverbindung, zu einer Auswertelektronik außerhalb der Behandlungseinheit nötig ist. Durch diese kompakte Anordnung ist es möglich die Messeinheit über längere Zeiträume im Behandlungsmedium zu belassen ohne zu riskieren, dass Geräteteile die nicht flüssigkeitstauglich sind mit dem Behandlungsmedium in Kontakt kommen. Darüber hinaus gewährt diese Anordnung, dass die Messeinheit sehr viel freier vertikal und horizontal innerhalb der Behandlungseinheit positioniert werden kann als eine Messvorrichtung mit einem Element welches außerhalb des Behandlungsmediums verbleiben muss und zusätzlich, dass die Anordnung sehr gut reproduzierbar ist. Dies ermöglicht unter anderem eine Anordnung in der Behandlungseinheit zwischen Werkstücken oder Geräten eingeordnet, um die Verteilung einer oder mehrerer Behandlungsprozessgrößen, beispielsweise in Zwischenräumen zwischen den Geräten oder Werkstücken, zu untersuchen und/oder zu dokumentieren, sowie ein Verbleiben der Messeinheit in einer Behandlungseinheit welche durch eine Reinigungsanlage bewegt wird. Dies wird auch dadurch begünstigt, dass die Messmittel innerhalb des Gehäuses liegen und so vor Schäden durch Kollision oder Druck der Beladung geschützt werden.

Die Messeinheit ist wie bereits angedeutet zur Anwendung in einer Ultraschallbehandlungsvorrichtung gedacht, welche eine Behandlungseinheit, zum Beispiel eine Behandlungswanne, aufweist in welcher ein Behandlungsmedium, insbesondere ein Reinigungsfluid, sowie die zu behandelnden Geräte oder Werkstücke aufgenommen werden können. Durch Anregungsmittel, insbesondere Ultraschallmittel wird in der Behandlungseinheit in einem Behandlungszustand eine Kavitationswirkung erzeugt die eine Behandlungsleistung für die aufgenommenen Geräte oder Werkstücke bereitstellt. Bei einem Ruhezustand der Behandlungsvorrichtung sind die Anregungsmittel inaktiv und es wird keine zyklische Kavitation im Behandlungsmedium erzeugt. Die Ultraschallvorrichtung kann als Einzelvorrichtung gedacht sein, oder Teil einer automatisierten Reinigungsanlage in welcher die Behandlungseinheit mehrere Reinigungsschritte durchläuft.

Die Messeinheit kann grundsätzlich verschieden Messmittel aufweisen wobei wenigstens eine Behandlungsprozessgröße erfasst wird. Bevorzugt werden Schallereignisse, insbesondere durch die Anregungsmittel erzeugte Schalldrücke und/oder Schallsignale kollabierender Kavitationsblasen mit einem Schallsensor gemessen, es können aber auch weitere Messmittel zur Erfassung von mehreren Behandlungsprozessgrößen, wie zum Beispiel die Temperatur des Behandlungsmediums, vorgesehen sein. Die Messmittel können zum Beispiel als piezoelektrische Druckempfänger und/oder als Schallwandler und/oder als Thermometer ausgebildet sein, sind aber nicht auf diese Ausführungsformen beschränkt.

Die Auswertelektronik erzeugt aus den durch die Messmittel aufgenommenen Messsignalen qualitative Messwerte die eine Einschätzung der Behandlungsleistung auf Basis der Behandlungsprozessgröße bereitstellen. Zusätzlich oder alternativ erzeugt die Auswertelektronik quantitative Messwerte der Behandlungsprozessgrößen aus den Messsignalen. Dabei kann ein Messsignal zu einem Messwert oder zu mehreren Messwerten verarbeitet werden. Ebenso können mehrere Messsignale zu einem Messwert kombiniert werden. Die Auswertelektronik kann bevorzugt zum Beispiel als Basis eine Leiterplatte umfassen, auf welcher ein Mikrokontroller ausgebildet ist, welche durch weitere elektronische Elemente ergänzt werden kann, ist aber nicht auf diese Ausführungsform beschränkt.

Das Gehäuse der Messeinheit besteht bevorzugt aus einem wasserabweisenden Material und begrenzt einen inneren Hohlraum in dem die Messmittel und Auswertelektronik eingeordnet sind. Bevorzugt ist das Gehäuse mechanisch und/oder durch zusätzliche Dichtmaterialen hermetisch versiegelt. Die Versiegelung des Gehäuses kann vorteilhaft derart ausgebildet sein, dass ein Öffnen und Wiederverschließen des Gehäuses möglich ist.

Gemäß einer ersten vorteilhaften Ausführungsform kann vorgesehen sein, dass die Messeinheit über Steuermittel verfügt, welche dynamisch auslösbar oder dem Nutzer zugänglich am Gehäuse montiert sind, die dazu eingerichtet sind, dass das Messmittel von einem Ruhezustand in einen Messzustand und umgekehrt überführt wird.

Steuermittel können zum Beispiel durch Schütteln, Drehen oder Antippen dynamisch ausgelöst werden, sind aber nicht auf die genannten Möglichkeiten beschränkt. Ebenso können Steuermittel vorgesehen sein, die dem Nutzer mechanisch zugänglich montiert sind, insbesondere als Schalter oder Knopf. Bevorzugt, kann ein Ausgabemittel, welches mit einem optischen oder akustischen Signal das Überführen zwischen den Zuständen bestätigt, den Steuermitteln zugeordnet sein.

Dies ist vorteilhaft da der Nutzer das Messmittel auf routinierte Weise vor dem Einsetzen in die Behandlungseinheit aktivieren und nach dem Herausnehmen deaktivieren kann. Die Steuermittel kennt der Nutzer intuitiv von Geräten seines alltäglichen Gebrauchs wodurch eine geringe Einstiegshürde für die Benutzung besteht.

Gemäß einer weiteren vorteilhaften Ausführungsform kann vorgesehen sein, dass die Messeinheit eine Energieumwandlungseinheit umfasst, mit der mechanische Schwingungen im Behandlungszustand der Ultraschallbehandlungsvorrichtung in elektrische Energie umgewandelt werden können.

Die Energieumwandlungseinheit kann insbesondere ein piezoelektrisches Element, bevorzugt einen piezoelektrischen Kristall umfassen, oder nach dem technischen Prinzip eines piezoelektrischen Elements einen "Energy Harvester" ausbilden.

Dies ist vorteilhaft, da die Messeinheit durch die autarke Energieerzeugung oder Energieumwandlung nicht an eine externe Energieversorgung angebunden sein muss. Dadurch muss am und/oder im Gehäuse der Messeinheit keine Anschlussstelle für eine externe Energieversorgung vorgesehen werden, welche durch eine am Gehäuse beweglich ausgebildete Dichtung für den Ladevorgang zugänglich sein müsste. Die hermetische Versiegelung des Gehäuses kann also leichter gestaltet werden und umfasst weniger Teile die durch wiederholten Gebrauch verschleißen und die Versiegelung beeinträchtigen können. Ebenso muss nicht daran gedacht werden einen zugeordneten Energiespeicher regelmäßig aufzuladen, da das Messmittel durch die Ultraschallschwingungen, die den zu messenden Behandlungsprozessgrößen zu Grunde liegen, Betriebsenergie erzeugen kann. Weiter vorteilhaft, kann durch die Energieumwandlungseinheit ein eigenständiger Steuermechanismus realisiert werden, welcher die Messeinheit bei Beginn eines Behandlungszustandes einer Behandlungsvorrichtung in einen Messzustand überführt und bei einem Ruhezustand der Behandlungsvorrichtung in einen eigenen Ruhezustand zurückführt.

In dieser Ausführungsform kann weiter vorteilhaft vorgesehen sein, dass die Energieumwandlungseinheit in Wirkverbindung, insbesondere in mechanischem Kontakt, mit dem Gehäuse der Messeinheit angeordnet ist, so dass im Behandlungszustand der Ultraschallbehandlungsvorrichtung Ultraschallschwingungen über das Gehäuse in die Energieumwandlungseinheit eingekoppelt werden.

Dies ist vorteilhaft, da durch die Aufnahme und Weiterleitung der Schwingungen über das Gehäuse, die Energieumwandlungseinheit vollständig innerhalb des Gehäuses angeordnet sein kann wodurch die kompakte Ausführungsform der Messeinheit weiter begünstigt wird. Ebenso kann das Gehäuse als quasi erweiterte Oberfläche der Energieumwandlungseinheit mechanische Schwingungen, eines größeren Bereiches aufnehmen und zentriert in die Energieumwandlungseinheit einkoppeln, wodurch eine höhere Umwandlungsleistung ermöglicht wird.

Gemäß einer weiteren vorteilhaften Ausführungsform kann vorgesehen sein, dass die Messeinheit über einen Energiespeicher verfügt, welcher bevorzugt wechselbar, im Gehäuse angeordnet und, besonders bevorzugt wieder aufladbar, ist.

Der Energiespeicher kann fest installiert, zum Beispiel verschweißt oder verschraubt im Gehäuse eingebaut sein oder wechselbar, zum Beispiel durch, aber nicht beschränkt auf, einen reversiblen Schnappmechanismus oder eine den Energiespeicher teilweise umfassende Erweiterung des Gehäuses. Einmalig zu verwendende Energiespeicher können vorgesehen sein, insbesondere Batterien. Des Weiteren können wieder aufladbare Akkumulatoren als Energiespeicher vorgesehen sein.

Dies ist vorteilhaft, da die Messeinheit durch einen Energiespeicher in ihrem Ruhezustand eine Grundfunktionalität beibehalten kann, in welcher weiterhin Messsignale zu Messwerten umgewandelt werden und dem Nutzer zugänglich sind. Ebenso kann die Messeinheit mit einem Energiespeicher auch ohne aktive Energieversorgung oder -erzeugung in einen Messzustand überführt und für einen definierten Zeitraum in diesem gehalten werden.

Gemäß einer weiteren vorteilhaften Ausführungsform kann vorgesehen sein, dass die Messeinheit insgesamt eine niedrigere Dichte als das Behandlungsmedium, insbesondere wässrige Lösungen, einer Ultraschallbehandlungsvorrichtung aufweist und dementsprechend an der Oberfläche des Behandlungsmediums schwimmt oder durch entsprechende Verankerungsmittel an der Ultraschallbehandlungsvorrichtung abgetaucht angeordnet sein kann.

Dies ist vorteilhaft, da die Messeinheit schwimmend in der Behandlungseinheit angeordnet sein kann und dem Anwender so gut zugänglich bleibt ohne manuell an der Oberfläche des Behandlungsmediums gehalten werden zu müssen. Auch bei einer abgetauchten Anordnung ist der Auftrieb der Messeinheit vorteilhaft, da die Messeinheit je nach Länge einer Verankerung oder Beschwerung auf Positionen der gesamten vertikalen Richtung der Füllhöhe der Behandlungseinheit fixiert werden kann. Ebenso können durch den Auftrieb Kippimpulse ausgleichen und die Messeinheit gegebenenfalls automatisch in eine aufrechte Position zurückbewegt werden.

Gemäß einer weiteren vorteilhaften Ausführungsform kann vorgesehen sein, dass die Messmittel derart mechanisch mit dem Gehäuse gekoppelt ausgebildet sind, dass das Gehäuse wenigstens teilweise, insbesondere in seiner Gesamtheit, als Hydrophon fungierend Schall-Drücke aufnehmen kann, welche in einem Behandlungszustand einer Ultraschallbehandlungsvorrichtung und im Messzustand der Messeinheit, bevorzugt linear, an die Messmittel übertragbar sind.

Dies ist vorteilhaft, da die Messmittel vollständig innerhalb des Gehäuses angeordnet sein können und so vor Schäden durch Kollision geschützt werden. Ebenso kann das Gehäuse bevorzugt derart auf die Messmittel abgestimmt sein, dass die Schallwellen nicht durch das Gehäuse abgelenkt werden, sondern weitestgehend linear an die Messmittel übertragen werden. In Folge würde ein systematischer Messfehler weitestgehend umgangen werden.

Gemäß einer weiteren vorteilhaften Ausführungsform kann vorgesehen sein, dass die Auswertelektronik dazu eingerichtet ist, dass im Messzustand aufgenommene Signale im Zeit- und/oder Frequenzbereich verarbeitet werden, insbesondere Temperatur, Schalldruck und fundamentale, harmonische und subharmonische Frequenzen und breitbandiges Rauschen. Weiter bevorzugt kann vorgesehen sein, dass weitere Analyseverfahren nachträglich zu der Auswertelektronik über kabellose und/oder kabelgebundene Datenübertragung hinzugefügt werden können.

Dies ist vorteilhaft, da zusätzlich zu den Messsignalen bereits direkt nutzbare Messwerte zur Verfügung gestellt werden ohne Erfahrung bei der Analyse der Messsignale vorauszusetzen.

Gemäß einer weiteren vorteilhaften Ausführungsform kann vorgesehen sein, dass die Messeinheit eine Ausgabeeinheit umfasst, mit der erzeugte qualitative Messwerte, bevorzugt optisch und/oder akustisch, an den Nutzer kommunizierbar sind.

Die Ausgabeeinheit kann bevorzugt zum Beispiel als Anzeigelampe, insbesondere LED, mit einer mehrfarbigen Statuskodierung ausgebildet sein oder als Display. Als Akustisches Signal wäre zum Beispiel eine Abfolge von Einzeltönen oder eine vokale Ansage möglich.

Dies ist vorteilhaft, da dem Anwender die ausgewerteten Messwerte sofort kommuniziert werden können ohne die Notwendigkeit für ein separates Auslesen der Daten oder Messwerte. Dies erspart dem Anwender Zeit, wenn die Messeinheit zum Beispiel genutzt wird um zu testen, ob die in einer Behandlungseinheit vorliegenden Behandlungsprozessgrößen auf dem für einen Behandlungsbeginn notwendigen Niveau sind. Des Weiteren erlaubt die Kommunikation zum Beispiel eines standardisierten Qualitätsmesswerts die Anwendung der Messeinheit zur Qualitätskontrolle auch ohne fortgeschrittenes technisches Verständnis der Behandlungsprozessgrößen.

Gemäß einer weiteren vorteilhaften Ausführungsform kann vorgesehen sein, dass die Messeinheit über eine im Gehäuse angeordnete Speichereinheit verfügt, auf welcher erzeugte Messwerte der Behandlungsprozessgrößen wenigstens eines Messdurchganges persistent gespeichert werden.

Dies ist vorteilhaft, da durch die Speichereinheit Datenverlust vermieden werden kann, einerseits falls der Anwender vergessen sollte die Daten zwischen Messdurchgängen auszulesen und andererseits falls die Messeinheit zum Beispiel beim Durchlaufen einer Reinigungsanlage zwischen Behandlungsvorgängen in ihren Ruhezustand überführt wird. Die Speichereinheit kann zum Beispiel als Flash basiertes Speichermedium ausgeführt sein, ist aber nicht auf diese Ausführungsform beschränkt. Weiter bevorzugt kann zusätzlich oder ausschließlich auch ein austauschbares Speichermedium, zum Beispiel eine SD-Karte vorgesehen werden.

Alternativ oder zusätzlich zu einer Datenspeichereinheit, kann in einer weiteren Ausführungsform vorteilhaft vorgesehen sein, dass die Messeinheit über ein Datentransfermittel verfügt, durch welches durch die Messmittel und Auswertelektronik erzeugte und/oder durch die Speichereinheit gespeicherte Messwerte und Daten, bevorzugt drahtlos, übertragbar und/oder auslesbar sind.

Dies ist vorteilhaft, da keine Anschlussstelle im oder am Gehäuse vorgesehen sein muss an der eine Verbindung zu einem externen Speichermedium angebracht werden kann. Dadurch kann das Gehäuse einfacher hermetisch versiegelt ausgestaltet und erhalten werden. Ebenso kann die Messeinheit während sie sich in der Behandlungseinheit befindet ausgelesen werden, wodurch ein Auslesen während laufender Behandlungsprozesse möglich ist, sowie ein Verbleib der Messeinheit in der Behandlungseinheit zwischen Behandlungsprozessen. Weiterhin ermöglichen die Datentransfermittel auch einen flexiblen oder und unkomplizierten Export der Messwerte. Dies kann besonders vorteilhaft genutzt werden, um eine Dokumentation des Betriebs der Ultraschallbehandlungsvorrichtung zu erzeugen und vorzuhalten. Dies vereinfacht in erheblicher Weise die Audit-Fähigkeit von Ultraschallbehandlungsvorrichtungen, die mit der erfindungsgemäßen Messeinheit betrieben oder überwacht werden. Die Datentransfermittel können beispielsweise auf einem standardisierten Übertragungsprotokoll, wie beispielsweise NFC, Bluetooth, WLAN oder dergleichen basieren. Alternativ kann auch ein individuelles Übertragungsprotokoll verwendet werden. Weiter bevorzugt kann zusätzlich oder alternativ eine Schnittstelle für eine kabelgebundene Datenübertragung vorgesehen werden, welche ein Auslesen der Daten auf Geräte erlaubt welche nicht mit kontaktlosen Datentransfermitteln kompatibel sind. Ebenso kann weiter bevorzugt vorgesehen sein, dass das Datentransfermittel einer externen Energiequelle zuordenbar ist, um eine interne Datenspeichereinheit mit Energie zu versorgen. Die Zuordnung kann zum Beispiel über einen Induktionsmechanismus und/oder eine USB-C Schnittstelle erfolgen, ist aber nicht auf diese Ausführungsformen beschränkt.

Weiterhin wird die oben genannte Aufgabe, durch ein Messsystem umfassend eine Messeinheit gemäß einer der vorangehenden Ausführungsformen sowie eine externe Datenspeichereinrichtung gelöst, wobei die externe Datenspeichereinrichtung dazu eingerichtet ist, die durch Messmittel und Auswerteelektronik der Messeinheit erzeugten qualitativen und/oder quantitativen Messwerte der Behandlungsprozessgröße persistent zu speichern.
Die Datenspeichereinrichtung kann lokal eingerichtet sein, insbesondere kann die Datenspeichereinrichtung als Datenserver im Kontext einer progressiven Web Applikation ausgebildet sein.

Dies ist vorteilhaft, da durch die gemeinsame Bereitstellung von Messeinheit und Datenspeichereinrichtung Inkompatibilität von Dateiformaten und Formatierungsfehler vorgebeugt werden können. Dadurch wird besonders der Weg von der Messung bis zur Archivierung der Messdaten erleichtert, wodurch das Messsystem effektiv in genormte Arbeitsabläufe integriert werden kann. Weiterhin wird dadurch in besonders vorteilhafter Weise eine Dokumentation über den Betrieb und die Zustände der Ultraschallbehandlungsvorrichtung möglich, die auch eine langfristige Nachprüfung der Prozesssicherheit erlaubt.

Gemäß einer weiteren vorteilhaften Ausführungsform kann vorgesehen sein, dass die externe Datenspeichereinrichtung eine Auswertelektronik umfasst, welche zur Erzeugung von qualitativen und/oder quantitativen Messwerten der Behandlungsprozessgröße aus den Messsignalen und Messwerten der Messeinheit eingerichtet ist.

Dies ist vorteilhaft, da die von der Messeinheit erzeugten Messwerte so mit zusätzlichen optionalen Datenverarbeitungsansätzen prozessiert werden können, welche auf der Auswertelektronik der Messeinheit nicht möglich oder nicht sinnvoll sind. Insbesondere, kann dem Nutzer auf der externen Auswertelektronik die Möglichkeit gegeben werden Analyseoptionen und Ausgabeformate zu wählen wodurch die erhaltenen Messwerte auf individuelle Bedürfnisse angepasst werden können. Die externe Auswertelektronik kann zum Beispiel als Webanwendung im Kontext einer progressiven Web Applikation ausgeführt sein.

Gemäß einer weiteren vorteilhaften Ausführungsform kann vorgesehen, dass die externe Datenspeichereinrichtung ein Datentransfermittel aufweist, durch welches gespeicherte Messwerte und aufbereitete Behandlungsprozessgrößen übertragbar und/oder auslesbar sind.

Das Datentransfermittel kann insbesondere als Exportmechanismus ausgebildet sein, welcher die ausgelesenen Daten in ein festgelegtes und/oder vom Nutzer gewähltes Dateiformat überführt.

Dies ist vorteilhaft um den Nutzer des Messsystems auf verschiedenen Abrufsystemen Zugang zu den Messsignalen und Messwerten zu verschaffen und eine homogene Datenform der Messwerte für die weitere Verwendung zu ermöglichen.

Weiterhin wird die oben genannte Aufgabe durch ein Verfahren zum Betrieb einer Messeinheit oder eines Messsystems zur Anwendung in einer Ultraschallbehandlungsvorrichtung mit einer Behandlungseinheit für die Aufnahme eines Behandlungsmediums und zu behandelnden Geräten oder Werkstücken, bevorzugt gemäß einer der vorhergehenden Ausführungsformen, gelöst, bei dem die Behandlungsvorrichtung Anregungsmittel aufweist, welche bei einem aktiven Behandlungszustand der Behandlungsvorrichtung zyklische Kavitation erzeugen und bei einem Ruhezustand keine Kavitation erzeugen, wobei die Messeinheit Messmittel umfasst, welche dazu eingerichtet sind Messsignale zu erzeugen, die wenigstens eine, während dem aktiven Behandlungszustand der Behandlungsvorrichtung bestehende, Behandlungsprozessgröße erfassen, wobei die Messeinheit in einem Messzustand eigenständig mit ihren Messmitteln Messsignale erfasst und auf ihrer Auswertelektronik qualitative und/oder quantitative Messwerte wenigstens einer Behandlungsprozessgröße aus den Messsignalen erzeugt.

Zur Vermeidung unnötiger Wiederholungen wird im Hinblick auf die vorteilhaften Wirkungen sowie die vorteilhaften Ausführungen des Verfahrens auf die oben beschriebene Messeinheit und das Messsystem verwiesen. Dies bedeutet auch, dass insgesamt vorrichtungsmäßig offenbarte Merkmale als verfahrensmäßig offenbart gelten sollen, und umgekehrt. Zusammengefasst ermöglicht das erfindungsgemäße Verfahren, dass die Messeinheit während des Behandlungsprozesses in einer Ultraschallbehandlungsvorrichtung verbleiben kann und konstant Messwerte erzeugt und auswertet.

Gemäß einer vorteilhaften Ausführungsform des Verfahrens kann vorgesehen sein, dass die Messeinheit sich bei Beginn des Behandlungszustandes einer Ultraschallbehandlungsvorrichtung, durch autarke Energiegewinnung der Energieumwandlungseinheit, selbständig von einem Ruhezustand in einen Messzustand überführt und nach Übergang der Ultraschallbehandlungsvorrichtung in einen Ruhezustand selbstständig in den eigenen Ruhezustand zurückkehrt.

Dies ist vorteilhaft, da es erlaubt die Messeinheit über mehrere Behandlungsdurchgänge in der Behandlungseinheit zu belassen um Messwerte zu erzeugen, ohne, dass ein manuelles Deaktivieren und/oder Aktivieren der Messeinheit zwischen den Durchgängen nötig ist.

Gemäß einer weiteren vorteilhaften Ausführungsform des Verfahrens kann vorgesehen sein, dass die Messeinheit in einem Messzustand qualitative und/oder quantitative Messwerte über eine Ausgabeeinheit kommuniziert.

Wie bereits oben beschrieben ist dies vorteilhaft um den Nutzer erzeugte Messwerte direkt zugänglich zu machen ohne ein Auslesen und Abrufen zu erfordern.

Gemäß einer weiteren vorteilhaften Ausführungsform des Verfahrens kann vorgesehen sein, dass die Messeinheit erzeugte Messsignale und Messwerte wenigstens eines Messdurchgangs auf einer internen Speichereinheit speichert. Besonders vorteilhaft kann eine Vielzahl von Messsignalen und Messwerten wenigstens eines Messdurchgangs und/oder einer Vielzahl von Messdurchgängen auf einer internen Speichereinheit gespeichert werden.

Wie bereits oben beschrieben ist dies vorteilhaft um Datenverlust zu vermeiden und ein Verbleiben der Messeinheit in einer Behandlungseinheit über mehrere Behandlungsdurchgänge zu ermöglichen.

Gemäß einer weiteren vorteilhaften Ausführungsform des Verfahrens kann vorgesehen sein, dass die Speichereinheit der Messeinheit bei Erreichen ihrer Speicherkapazität eigenständig die gespeicherten Messwerte, absteigend nach Alter der Messung, überschreibt.

Dies ist vorteilhaft, da kein manuelles Bereinigen der Speichereinheit durch den Anwender notwendig ist und so einem Datenverlust vorgebeugt werden kann.

Gemäß einer weiteren vorteilhaften Ausführungsform des Verfahrens kann vorgesehen sein, dass die gespeicherten Messsignale und/oder Messwerte der Behandlungsprozessgrößen der Messeinheit, bevorzugt drahtlos, über ein Datentransfermittel ausgelesen werden können. Dabei kann vorgesehen sein, dass das Auslesen oder der Austausch durch einen Nutzer initiiert oder ausgelöst werden kann oder ausgelöst werden muss. Alternativ kann auch besonders vorteilhaft vorgesehen sein, dass ein automatisches Auslesen durchgeführt wird, beispielsweise wenn die Datentransfermittel eine Verbindung zu einer externen Datenspeichereinrichtung aufgebaut hat und im Rahmen eines routinemäßigen Überprüfens der Speichereinheit festgestellt wird, dass jüngere oder jüngste Messwerte noch nicht ausgelesen und/oder übertragen wurden.

Wie bereits oben beschrieben, ist dies vorteilhaft da die Messeinheit so ausgelesen werden kann während sie noch Messwerte erzeugt und zwischen Messdurchgängen nicht aus der Behandlungseinheit entfernt werden muss.

Gemäß einer weiteren vorteilhaften Ausführungsform des Verfahrens kann vorgesehen sein, dass die gespeicherten Messsignale und/oder Messwerte der Behandlungsprozessgrößen der Messeinheit, bevorzugt drahtlos, über eine Datentransfermittel an eine externe Datenspeichereinrichtung übertragen werden können.

Dies ist vorteilhaft, da es wie bereits oben beschrieben den Weg von der Erzeugung von Messsignalen und Messwerten zu einer dauerhaften Datenarchivierung verkürzt und Inkompatibilität zwischen dem Datenformat der Messwerte und der Speichereinheit vorbeugt.

Gemäß einer weiteren vorteilhaften Ausführungsform des Verfahrens kann vorgesehen sein, dass die gespeicherten Messsignale und/oder Messwerte der Behandlungsprozessgröße auf der externen Datenspeichereinrichtung durch eine Auswertelektronik zu Erzeugung von qualitativen und/oder quantitativen Messwerten der Behandlungsprozessgröße genutzt werden.

Wie bereits oben beschrieben, ist dies vorteilhaft da so optionale Auswertoptionen bereitgestellt werden können und der Anwender die Auswertoptionen und Ausgabeformate für seine Bedürfnisse anpassen kann.

Gemäß einer weiteren vorteilhaften Ausführungsform des Verfahrens kann vorgesehen sein, dass die qualitativen und/oder quantitativen Messwerten der Behandlungsprozessgröße auf dem externen Datenspeicher über eine Datentransfermittel durch den Nutzer ausgelesen werden können.

Wie bereits oben beschrieben, ist dies vorteilhaft da die Messwerte so auf verschiedenen Geräten welche auf den Datenspeicher zugreifen können ausgelesen werden können und in einem homogenen Datenformat, welches zum Beispiel die Analyse ganzer Datensätze erlaubt bereitgestellt werden können.

Nachfolgend wird die vorliegende Erfindung anhand von lediglich schematischen, beispielhafte Ausführungsformen der Erfindung zeigenden Zeichnungen näher erläutert.

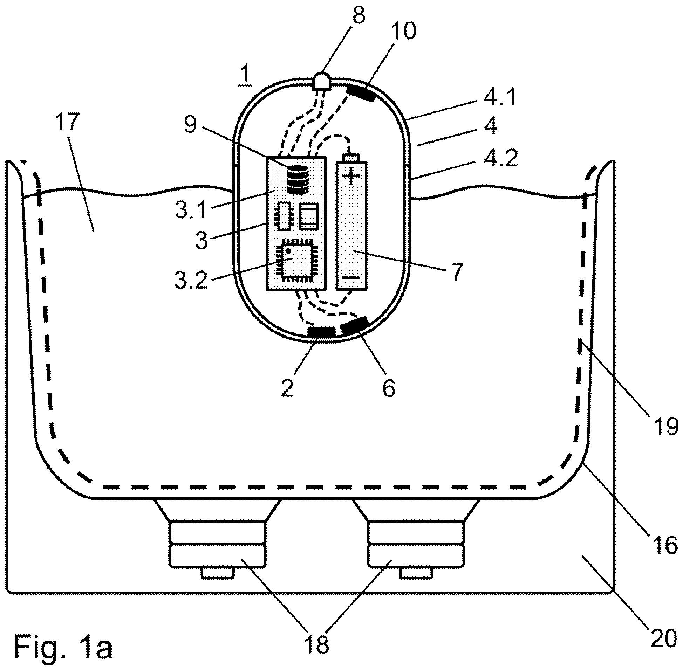

Fig. 1a: eine schematische Querschnittsdarstellung einer Messeinheit in einer ersten Ausführungsform, schwimmend in einer Ultraschallbehandlungseinheit angeordnet
Fig. 1 b: eine schematische Darstellung einer Messeinheit in einer ersten Ausführungsform abgetaucht in einer Ultraschallbehandlungseinheit angeordnet
Fig. 2: eine schematische Darstellung eines Messsystems in einer ersten Ausführungsform, umfassend eine Messeinheit und eine externe Datenspeichereinrichtung
Fig. 3 ein schematischer Ablauf eines Verfahrens zur Benutzung eines Messsystems in einer ersten Ausführungsform

Die Fig. 1a zeigt eine Querschnittsansicht auf eine Ausführungsform einer erfindungsgemäßen Messeinheit 1, welche schwimmend in einer Ultraschallbehandlungsvorrichtung 20 angeordnet ist. Die Ultraschallbehandlungsvorrichtung 20 wird zur Verdeutlichung funktioneller Merkmale der Messeinheit 1 dargestellt ist aber nicht Teil der erfinderischen Messeinheit oder des erfindungsgemäßen Messystems. Die Ultraschallbehandlungsvorrichtung umfasst eine Behandlungseinheit 16, welche mit einem Behandlungsmedium 17 befüllt ist. Weiterhin ist ein Behandlungskorb 19 in der Behandlungseinheit 16 angeordnet. Durch die Anregungsmittel 18 wird im Behandlungsmedium 17 im Behandlungszustand eine Kavitationsleistung erzeugt.

Die Messeinheit ist mit einem Gehäuse 4 vorgesehen, dessen Gehäuseteile 4.1 und 4.2 bevorzugt hermetisch miteinander abschließen. Am Gehäuse 4 ist eine Ausgabeeinheit 8 vorgesehen, die flüssigkeitsundurchlässig mit dem Gehäuseteil 4.1 verbaut ist. Am Gehäuse 4 können weiterhin Steuermittel 5 vorgesehen sein, welche aus Gründen der Übersichtlichkeit hier nicht näher dargestellt sind. Alternativ kann auch auf die Steuermittel 5 verzichtet werden, beispielsweise wenn die Messeinheit 1 selbsttätig in einen aktiven und einen inaktiven Zustand versetzbar ist, wie nachfolgend noch beschreiben werden wird.

Innerhalb des Gehäuses 4 ist eine Energieumwandlungseinheit 6 angeordnet welche derart in mechanischem Kontakt mit dem Gehäuse 4 angeordnet ist, dass Ultraschallschwingungen über das Gehäuse 4 in die Energieumwandlungseinheit 6 eingekoppelt werden. Die Energieumwandlungseinheit 6 kann damit auch genutzt werden, um die Messeinheit 1 zu aktivieren und zu deaktivieren. Mit anderen Worten ausgedrückt, kann über die Energieumwandlungseinheit 6 ein selbstständiges "Aufwecken" der Messeinheit 1 aus einem Ruhezustand erreicht werden. Ebenso innerhalb des Gehäuses 4 ist ein Energiespeicher 7 angeordnet, welcher verschweißt oder verschraubt sein kann oder bevorzugt durch einen reversiblen Fixiermechanismus austauschbar ausgebildet ist. Weiterhin sind innerhalb des Gehäuse 4 Messmittel 2 mit dem Gehäuse 4 mechanisch verbunden angeordnet und dazu eingerichtet Messsignale möglichst linear über das Gehäuse 4 zu empfangen.

Die Messmittel 2 und Energieumwandlungseinheit 6 sind mit einer innerhalb des Gehäuses 4 angeordneten Auswertelektronik 3 verbunden ausgebildet. Die Auswertelektronik 3 ist derart ausgebildet, dass sie in einem Messzustand der Messeinheit 1 Messsignale von den Messmitteln 2 empfängt und zu Messwerten umwandelt, welche bevorzugt im Zeit und/oder Frequenzbereich verarbeitet werden. Hierbei wird wenigstens eine Behandlungsprozessgröße erfasst und ausgewertet, besonders bevorzugt in der Ultraschallbehandlungsvorrichtung 20 vorherrschende Schalldrücke und/oder weiter bevorzugt Ultraschallfrequenzen und/oder Kavitationsrauschen und/oder Schalldruckspektren und/oder Temperatur und/oder weitere Behandlungsprozessgrößen, welche für die Erfassung der Behandlungsleistung einer Ultraschallbehandlungsvorrichtung von Relevanz sein können. Die Auswerteelektronik 3 kann einen Mikrokontroller 3.2 und weitere elektronische Komponenten aufweisen, die bevorzugt auf einem gemeinsamen Grundelement, beispielsweise einer Leiterplatte 3.1 angeordnet sein können. Bevorzugt können zur Bereitstellung der Auswertleistungen auf der Auswertelektronik 3 vorprogrammierte Verfahren, insbesondere AD-Wandlung, Analoge Antialiasing Filterung, Digitale Antialiasing Filterung, Integraltransformation, Mittelwertberechnung und Medianberechnung, vorgesehen sein. Weiter bevorzugt, können Analyseverfahren nachträglich, zum Beispiel über das Datentransfermittel, auf die Auswertelektronik 3 aufgespielt werden.

Die Auswertelektronik 3 ist mit einer Ausgabeeinheit 8 derart verbunden, dass erzeugte qualitative Messwerte optisch oder akustisch an den Anwender kommuniziert werden. Die Auswertelektronik 3 ist ebenso mit einer nicht näher dargestellten Speichereinheit 9 verbunden ausgebildet, welche dazu eingerichtet ist Messwerte wenigstens eines Messdurchgangs persistent zu speichern. Die Speichereinheit 9 kann insbesondere als elektronisches Element auf einer Leiterplatte 3.1 ausgebildet sein, zum Beispiel als Flash basiertes Speichermedium, ist aber nicht auf diese Ausführungsform beschränkt. Weiter bevorzugt kann zusätzlich oder ausschließlich auch ein austauschbares Speichermedium, zum Beispiel eine SD-Karte vorgesehen werden. Weiterhin ist ein Datentransfermittel 10 vorgesehen, welches in Verbindung mit der Auswertelektronik 3 und Speichereinheit 9 angeordnet ist und dazu ausgebildet ist, dass erzeugte Messwerte bevorzugt drahtlos auslesbar sind. Die Datentransfermittel 10 können beispielsweise auf einem standardisierten Übertragungsprotokoll, wie beispielsweise NFC, Bluetooth, WLAN oder dergleichen basieren. Alternativ kann auch ein individuelles Übertragungsprotokoll verwendet werden. Weiter bevorzugt, kann zusätzlich oder alternativ eine Schnittstelle für eine kabelgebundene Datenübertragung vorgesehen sein, um eine Datenübertragung auf Geräte, welche nicht mit kontaktloser Datenübertragung kompatibel sind, zu ermöglichen. Ebenso kann vorgesehen sein, dass das Datentransfermittel 10 einer externen Energiequelle zuordenbar ist, zum Beispiel durch einen Induktionsmechanismus oder ein USB-C Kabel, und die Speichereinheit 9 in einem Ruhezustand der Messeinheit 1 mit Energie versorgen kann.

Die Messeinheit 1 weist in ihrer vollständigen Anordnung, bevorzugt hermetisch versiegelten und/oder abgedichteten Form, eine niedrigere Dichte als das Behandlungsmedium einer Ultraschallbehandlungsvorrichtung auf und schwimmt dementsprechend an der Oberfläche des Behandlungsmediums. Dies bezieht sich vorzüglich auf wässrige Medien, kann aber je nach Bedarf und eingesetztem Behandlungsmedium auch auf andere Dichten von Behandlungsmedien angepasst werden.

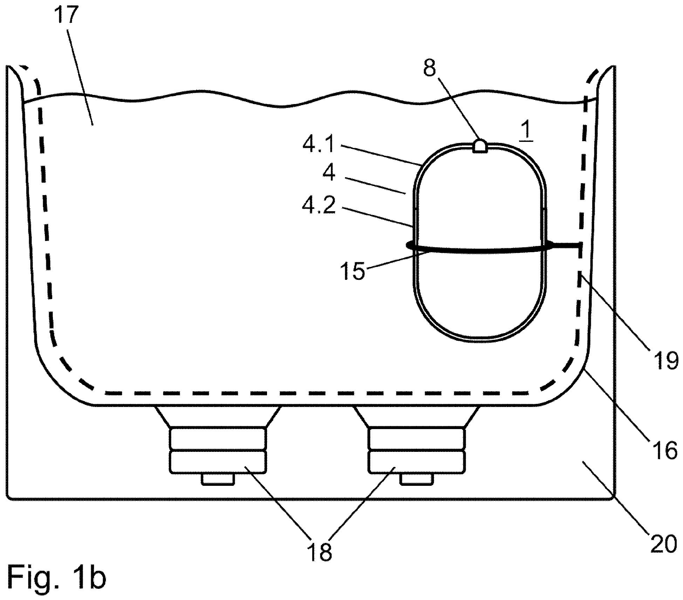

Die Fig. 1b zeigt eine schematische Darstellung der Messeinheit 1 in einer abgetauchten Anordnung in einer Behandlungseinheit 16 einer Ultraschallbehandlungsvorrichtung 20. Die Messeinheit 1 wird durch ein Verankerungsmittel 15 am Behandlungskorb 19 in der abgetauchten Anordnung fixiert. Das Verankerungsmittel 15 kann an einer Seite bevorzugt am Gehäuse 4 fixiert werden, durch ein Umgreifen des Gehäuses 4, zum Beispiel mit einem Kabelbinder oder einer Gummischnalle und/oder an einer Ausformung des Gehäuses 4 eingehakt werden und/oder an der Oberfläche des Gehäuses 4 befestigt werden, zum Beispiel durch einen Saugmechanismus oder magnetische Anziehung. Das Verankerungsmittel 15 kann an seiner dem Gehäuse 4 abgewandten Seite bevorzugt zum Beispiel an einem Behandlungskorb 19 befestigt werden und/oder durch Beschwerung am Boden der Behandlungseinheit 16 angeordnet sein.

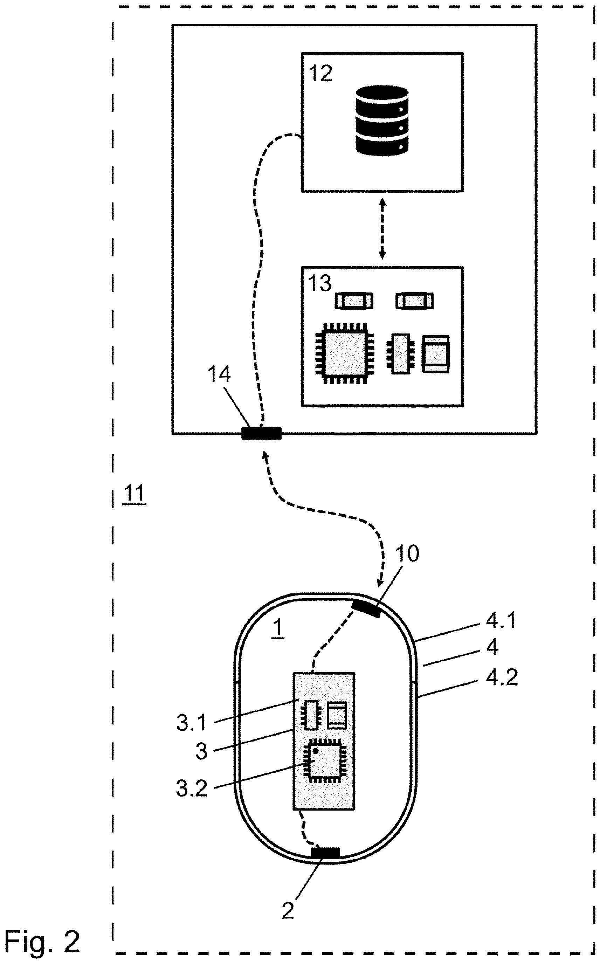

Die Fig. 2 zeigt eine schematische Darstellung eines erfindungsgemäßen Messsystems 11, umfassend eine Messeinheit 1 und eine externe Datenspeichereinrichtung 12. Die Messeinheit umfasst hierbei wenigstens Messmittel 2, eine Auswertelektronik 3 und Datentransfermittel 10, welche in einem gemeinsamen Gehäuse 4 angeordnet sind. Das Gehäuse 4 umfasst ein erstes Gehäuseteil 4.1 und ein zweites Gehäuseteil 4.2, welche bevorzugt derart angeordnet sind, dass das Gehäuse 4 geöffnet werden kann, wobei die Anordnung der Gehäuseteile 4.1 und 4.2 im geschlossenen Zustand hermetisch dicht ausgebildet ist. Die Auswertelektronik 3 ist derart ausgebildet, dass sie in einem Messzustand der Messeinheit 1 Messsignale von den Messmitteln 2 empfängt und zu Messwerten umwandelt, welche bevorzugt im Zeit und/oder Frequenzbereich verarbeitet werden. Hierbei wird wenigstens eine Behandlungsprozessgröße erfasst und ausgewertet, wenigstens Schallereignisse. Die Auswerteelektronik 3 kann einen Mikrokontroller 3.2 und weitere elektronische Komponenten aufweisen, die bevorzugt auf einem gemeinsamen Grundelement, beispielsweise einer Leiterplatte 3.1 angeordnet sein können. Bevorzugt können zur Bereitstellung der Auswertleistungen auf der Auswertelektronik 3 vorprogrammierte Verfahren, insbesondere AD-Wandlung, Analoge Antialiasing Filterung, Digitale Antialiasing Filterung, Integraltransformation, Mittelwertberechnung und Medianberechnung, vorgesehen sein. Weiter bevorzugt, können Analyseverfahren nachträglich, zum Beispiel über das Datentransfermittel, auf die Auswertelektronik 3 aufgespielt werden. Die Datentransfermittel 10 können beispielsweise auf einem standardisierten Übertragungsprotokoll, wie beispielsweise NFC, Bluetooth, WLAN oder dergleichen basieren. Alternativ kann auch ein individuelles Übertragungsprotokoll verwendet werden. Weiter bevorzugt, kann zusätzlich oder alternativ eine Schnittstelle für eine kabelgebundene Datenübertragung vorgesehen sein, um eine Datenübertragung auf Geräte, welche nicht mit kontaktloser Datenübertragung kompatibel sind, zu ermöglichen. Durch die Datentransfermittel 10 können durch die Messmittel 2 und die Auswertelektronik 3 erzeugte Messdaten auf eine externe Datenspeichereinrichtung 12 übertragen werden. Die externe Datenspeichereinrichtung 12 ist derart eingerichtet um die Messdaten persistent zu speichern. Die Datenspeichereinrichtung kann lokal eingerichtet sein, insbesondere kann die Datenspeichereinrichtung als Datenserver im Kontext einer progressiven Web Applikation ausgebildet sein. Weiterhin umfasst die Datenspeichereinrichtung 12 eine externe Auswertelektronik 13, welche zur Erzeugung von qualitativen und/oder quantitativen Messwerten der Behandlungsprozessgröße aus den Messdaten der Messeinheit eingerichtet ist. Die externe Auswertelektronik 13 kann über dieselben Auswertmöglichkeiten wie die Auswertelektronik 3 der Messeinheit 1 verfügen und zusätzlich oder alternativ optionale Datenverarbeitungsansätzen umfassen, welche auf der Auswertelektronik 3 der Messeinheit 1 nicht möglich oder nicht sinnvoll sind. Weiterhin umfasst die externe Datenspeichereinrichtung 12 Datentransfermittel 14, welche zum Beispiel als Exportmechanismus ausgebildet sein können. Alternativ oder zusätzlich können die Datentransfermittel auch einen Importmechanismus aufweisen, welcher die von der Messeinheit 1 erfassten Daten in ein festgelegtes oder durch den Nutzer gewähltes Dateiformat überführt.

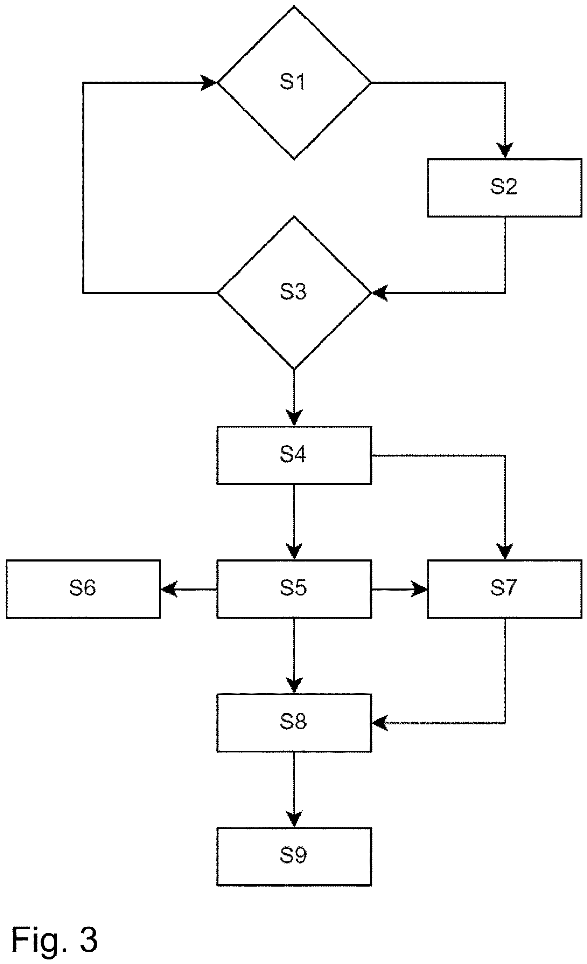

Die Fig. 3 zeigt einen schematischen Verfahrensablauf einer Ausführungsform eines erfindungsgemäßen Messsystems. In einem ersten Verfahrensschritt S1 befindet sich die Messeinheit 1 in einem Ruhezustand, in welchen keine Messsignale erzeugt werden. Bevorzugt kann die Messeinheit 1 im Ruhezustand durch einen Energiespeicher 7 eine Grundfunktionalität aufweisen, in welcher Messdaten ausgelesen werden können. Im Verfahrensschritt S2 werden in einer Ultraschallbehandlungsvorrichtung 20 durch Anregungsmittel 18 Ultraschallschwingungen erzeugt, welche über das Gehäuse 4 in eine Energieumwandlungseinheit 6 eingekoppelt werden, wodurch die Messeinheit 1 in Verfahrensschritt S3 in einen Messzustand überführt wird. Wenn die Energieumwandlungseinheit 6 keine weiteren Ultraschallschwingungen empfängt, weil zum Beispiel die Ultraschallbehandlungsvorrichtung 20 in einen Ruhezustand überführt wurde, wird keine mechanische Energie mehr in elektrische Energie umgewandelt und die Messeinheit 1 wieder in ihren Zustand des Verfahrensschritts S1 überführt. Solange sich die Messeinheit 1 in S3 befindet können und/oder werden in einem Verfahrensschritt S4 durch die Messmittel 2 einmalig, wiederholt oder fortlaufend Messsignale erzeugt. Die Messsignale werden in Verfahrensschritt S5 durch die Auswertelektronik 3 zu Messwerten gewandelt und in einem Verfahrensschritt S6 über eine Ausgabeeinheit 8 an den Anwender optisch und/oder akustisch kommuniziert. Alternativ oder zusätzlich werden die Messsignale aus S4 und die Messwerte aus S5 in einem Verfahrensschritt S7 auf einer Speichereinheit 9 persistent gespeichert. Bei Erreichen ihrer Speicherkapazität überschreibt die Speichereinheit 9 in S7 eigenständig Messwerte, absteigend nach Alter der Messung, um neue Messdaten zu speichern. Die Messdaten aus S4 und/oder S5 und/oder S7 werden in einem Verfahrensschritt S8 über ein Transfermittel 10 bevorzugt kontaktlos an den Anwender ausgegeben und/oder an eine externe persistente Datenspeichereinrichtung 12 übermittelt. In einem Verfahrensschritt S9 können die gespeicherten Messdaten auf der externen Datenspeichereinrichtung 12 durch eine externe Auswertelektronik 13 zu weiteren Messwerten verarbeitet werden. Ob und welche Auswertmethodik angewendet wird kann bevorzugt durch den Anwender beeinflusst und/oder frei gewählt werden. Weiterhin können sowohl die ursprünglichen Messdaten als auch die in S9 weiterverarbeiteten Messwerte durch ein Transfermittel 14 ausgelesen werden. Das Ausgebformat kann hierbei bevorzugt durch den Anwender gewählt und auf individuelle Bedürfnisse angepasst werden.

### Bezugszeichen

- 1: Messeinheit
- 2: Messmittel
- 3: Auswertelektronik
- 3.1: Leiterplatte
- 3.2: Mikrokontroller
- 4: Gehäuse
- 4.1: erstes Gehäuseteil
- 4.2: zweites Gehäuseteil
- 5: Steuermittel
- 6: Energieumwandlungseinheit
- 7: Energiespeicher
- 8: Ausgabeeinheit
- 9: Speichereinheit
- 10: Datentransfermittel
- 11: Messsystem
- 12: externe Datenspeichereinrichtung
- 13: externe Auswertelektronik
- 14: Datentransfermittel
- 15: Verankerungsmittel
- 16: Behandlungseinheit
- 17: Behandlungsmedium
- 18: Anregungsmittel
- 19: Behandlungskorb
- 20: Ultraschallbehandlungsvorrichtung
- S1: Verfahrensschritt Ruhezustand
- S2: Verfahrensschritt Energieumwandlung
- S3: Verfahrensschritt Messzustand
- S4: Verfahrensschritt Messsignal Erzeugung
- S5: Verfahrensschritt Messwert Erzeugung
- S6: Verfahrensschritt Messwert Ausgabe
- S7: Verfahrensschritt Datenspeicherung
- S8: Verfahrensschritt Datenauslesung /-übertragung
- S9: Verfahrensschritt Datenspeicherung /-auswertung /-auslesung

## Patentansprüche

1. Eine elektromechanische Messeinheit,
zur Anwendung in einer Ultraschallbehandlungsvorrichtung (20) mit einer Behandlungseinheit (16) für die Aufnahme eines Behandlungsmediums (17) und zu behandelnden Geräten oder Werkstücken,
wobei die Behandlungsvorrichtung Anregungsmittel (18) aufweist, welche bei einem aktiven Behandlungszustand der Behandlungsvorrichtung (20) zyklische Kavitation erzeugen und bei einem Ruhezustand keine Kavitation erzeugen,
wobei die Messeinheit (1) Messmittel (2) umfasst, welche dazu eingerichtet sind Messsignale zu erzeugen, die wenigstens eine, während dem aktiven Behandlungszustand der Behandlungsvorrichtung (20) bestehende, Behandlungsprozessgröße, wenigstens Schallereignisse, erfassen,
**dadurch gekennzeichnet,**
**dass** die Messmittel (2) und eine Auswerteelektronik (3), die zur Erzeugung von qualitativen und/oder quantitativen Messwerten der Behandlungsprozessgröße aus den Messsignalen eingerichtet ist, in einem gemeinsamen, bevorzugt hermetisch versiegelten, Gehäuse (4) der Messeinheit angeordnet sind.

2. Messeinheit nach Anspruch 1
**dadurch gekennzeichnet,**
**dass** die Messeinheit (1) über Steuermittel (5) verfügt, welche dynamisch auslösbar oder dem Nutzer zugänglich am Gehäuse (4) montiert sind, die dazu eingerichtet sind, dass die Messmittel (2) von einem Ruhezustand in einen Messzustand und umgekehrt überführt werden.

3. Messeinheit nach Anspruch 1 oder 2
**dadurch gekennzeichnet,**
**dass** die Messeinheit (1) eine Energieumwandlungseinheit (6) umfasst, mit der mechanische Schwingungen im Behandlungszustand der Ultraschallbehandlungsvorrichtung (20) in elektrische Energie umgewandelt werden können.

4. Messeinheit nach Anspruch 3,
**dadurch gekennzeichnet,**
**dass** die Energieumwandlungseinheit (6) in Wirkverbindung, insbesondere in mechanischem Kontakt, mit dem Gehäuse (4) der Messeinheit (1) angeordnet ist, so dass im Behandlungszustand der Ultraschallbehandlungsvorrichtung (20) Ultraschallschwingungen über das Gehäuse (4) in die Energieumwandlungseinheit (6) eingekoppelt werden.

5. Messeinheit nach einem der Ansprüche 1 bis 4
**dadurch gekennzeichnet,**
**dass** die Messeinheit (1) über einen Energiespeicher (7) verfügt, welcher, bevorzugt wechselbar, im Gehäuse (4) angeordnet und, besonders bevorzugt wieder aufladbar, ist.

6. Messeinheit nach einem der Ansprüche 1 bis 5
**dadurch gekennzeichnet,**
**dass** die Messeinheit (1) insgesamt eine niedrigere Dichte als das Behandlungsmedium (17), insbesondere wässrige Lösungen, einer Ultraschallbehandlungsvorrichtung (20) aufweist und dementsprechend an der Oberfläche des Behandlungsmediums (17) schwimmt oder durch entsprechende Verankerungsmittel (15) an der Ultraschallbehandlungsvorrichtung (20) abgetaucht angeordnet sein kann.

7. Messeinheit nach einem der Ansprüche 1 bis 6
**dadurch gekennzeichnet,**
**dass** die Messmittel (2) derart mechanisch mit dem Gehäuse (4) gekoppelt ausgebildet sind, dass das Gehäuse (4) wenigstens teilweise, insbesondere in seiner Gesamtheit, als Hydrophon fungierend Schall-Drücke aufnehmen kann, welche in einem Behandlungszustand einer Ultraschallbehandlungsvorrichtung (20) und im Messzustand der Messeinheit (1), bevorzugt linear, an die Messmittel (2) übertragbar sind.

8. Messeinheit nach einem der Ansprüche 1 bis 7
**dadurch gekennzeichnet,**
**dass** die Auswertelektronik (3) dazu eingerichtet ist, dass im Messzustand aufgenommene Signale im Zeit- und/oder Frequenzbereich verarbeitet werden, insbesondere Temperatur, Schalldruck und fundamentale, harmonische und subharmonische Frequenzen und breitbandiges Rauschen.

9. Messeinheit nach einem der Ansprüche 1 bis 8
**dadurch gekennzeichnet,**
**dass** die Messeinheit (1) eine Ausgabeeinheit (8) umfasst, mit der erzeugte qualitative Messwerte, bevorzugt optisch und/oder akustisch kommunizierbar sind.

10. Messeinheit nach einem der Ansprüche 1 bis 9
**dadurch gekennzeichnet,**
**dass** die Messeinheit (1) über eine im Gehäuse (4) angeordnete Speichereinheit (9) verfügt, auf welcher erzeugte Messwerte der Behandlungsprozessgrößen wenigstens eines Messdurchganges persistent gespeichert werden.

11. Messeinheit nach einem der Ansprüche 1 bis 10
**dadurch gekennzeichnet,**
**dass** die Messeinheit (1) über ein Datentransfermittel (10) verfügt, durch welches durch die Messmittel (2) und Auswertelektronik (3) erzeugte und/oder durch die Speichereinheit (9) gespeicherte Messwerte und Daten, bevorzugt drahtlos, übertragbar und/oder auslesbar sind.

12. Ein Messsystem,
umfassend eine Messeinheit (1) nach einem der Ansprüche 1 bis 11 sowie eine externe Datenspeichereinrichtung (12),
wobei die externe Datenspeichereinrichtung (12) dazu eingerichtet ist, die durch Messmittel (2) und Auswerteelektronik (3) der Messeinheit (1) erzeugten qualitativen und/oder quantitativen Messwerte der Behandlungsprozessgröße persistent zu speichern.

13. Messsystem nach Anspruch 12
**dadurch gekennzeichnet,**
**dass** die externe Datenspeichereinrichtung (12) eine Auswertelektronik (13) umfasst, welche zur Erzeugung von qualitativen und/oder quantitativen Messwerten der Behandlungsprozessgröße aus den Messsignalen und Messwerten der Messeinheit (1) eingerichtet ist.

14. Messsystem nach einem der Ansprüche 12 oder 13
**dadurch gekennzeichnet,**
**dass** die externe Datenspeichereinrichtung (12) ein Datentransfermittel (14) aufweist, durch welches gespeicherte Messwerte und aufbereitete Behandlungsprozessgrößen übertragbar und/oder auslesbar sind.

15. Verfahren zum Betrieb einer Messeinheit (1) und/oder eines Messsystems (11),
bevorzugt nach einem der Ansprüche 1 bis 14,
zur Anwendung in einer Ultraschallbehandlungsvorrichtung (20) mit einer Behandlungseinheit (16) für die Aufnahme eines Behandlungsmediums (17) und zu behandelnden Geräten oder Werkstücken,
wobei die Behandlungsvorrichtung (20) Anregungsmittel (18) aufweist, welche bei einem aktiven Behandlungszustand der Behandlungsvorrichtung (20) zyklische Kavitation erzeugen und bei einem Ruhezustand keine Kavitation erzeugen,
wobei die Messeinheit (1) Messmittel (2) umfasst, welche dazu eingerichtet sind Messsignale zu erzeugen, die wenigstens eine, während dem aktiven Behandlungszustand der Behandlungsvorrichtung bestehende, Behandlungsprozessgröße erfassen,
**dadurch gekennzeichnet,**
**dass** die Messeinheit (1) in einem Messzustand eigenständig mit ihren Messmitteln (2) Messsignale erfasst und auf ihrer Auswertelektronik (3) qualitative und/oder quantitative Messwerte wenigstens einer Behandlungsprozessgröße aus den Messsignalen erzeugt.

16. Verfahren zum Betrieb einer Messeinheit und/oder eines Messsystems,
nach Anspruch 15,
**dadurch gekennzeichnet,**
**dass** die Messeinheit (1) sich bei Beginn des Behandlungszustandes einer Ultraschallbehandlungsvorrichtung (20), durch autarke Energiegewinnung der Energieumwandlungseinheit (6), selbständig von einem Ruhezustand in einen Messzustand überführt und nach Übergang der Ultraschallbehandlungsvorrichtung (20) in einen Ruhezustand, selbstständig in den eigenen Ruhezustand zurückkehrt.

17. Verfahren zum Betrieb einer Messeinheit und/oder eines Messsystems,
nach einem der Ansprüche 15 oder 16,
**dadurch gekennzeichnet,**
**dass** die Messeinheit (1) in einem Messzustand qualitative und/oder quantitative Messwerte über eine Ausgabeeinheit (8) kommuniziert.

18. Verfahren zum Betrieb einer Messeinheit und/oder eines Messsystems,
nach einem der Ansprüche 15 bis 17,
**dadurch gekennzeichnet,**
**dass** die Messeinheit (1) erzeugte Messsignale und Messwerte wenigstens eines Messdurchgangs auf einer internen Speichereinheit (9) speichert.

19. Verfahren zum Betrieb einer Messeinheit und/oder eines Messsystems
nach Anspruch 18
**dadurch gekennzeichnet,**
**dass** die Speichereinheit (9) der Messeinheit (1) bei Erreichen ihrer Speicherkapazität eigenständig die gespeicherten Messwerte, absteigend nach Alter der Messung, überschreibt.

20. Verfahren zum Betrieb einer Messeinheit und/oder eines Messsystems,
nach einem der Ansprüche 18 bis 19
**dadurch gekennzeichnet,**
**dass** die gespeicherten Messsignale und/oder Messwerte der Behandlungsprozessgrößen, bevorzugt drahtlos, über ein Datentransfermittel (10) der Messeinheit (1) ausgelesen werden können.

21. Verfahren zum Betrieb einer Messeinheit und/oder eines Messsystems,
nach einem der Ansprüche 18 bis 20,
**dadurch gekennzeichnet,**
**dass** die gespeicherten Messsignale und/oder Messwerte der Behandlungsprozessgrößen, bevorzugt drahtlos, über ein Datentransfermittel (10) der Messeinheit (1) an eine externe Datenspeichereinrichtung (12) übertragen werden können.

22. Verfahren zum Betrieb einer Messeinheit und/oder eines Messsystems,
nach einem der Ansprüche 18 bis 21,
**dadurch gekennzeichnet,**
**dass** die gespeicherten Messsignale und/oder Messwerte der Behandlungsprozessgröße auf der externen Datenspeichereinrichtung (12) durch eine Auswertelektronik (13) zu Erzeugung von qualitativen und/oder quantitativen Messwerten der Behandlungsprozessgröße genutzt werden.

23. Verfahren zum Betrieb einer Messeinheit und/oder eines Messsystems,
nach einem der Ansprüche 18 bis 22,
**dadurch gekennzeichnet,**
**dass** die qualitativen und/oder quantitativen Messwerten der Behandlungsprozessgröße auf der externen Datenspeichereinrichtung (12) über eine Datentransfermittel (14) ausgelesen werden können.
